# EUROPÄISCHE PATENTSCHRIFT

(11) **EP 3 363 586 B1**
(45) Veröffentlichungstag und Bekanntmachung des Hinweises auf die Patenterteilung: **11.12.2019**
(21) Anmeldenummer: 17208072.3
(22) Anmeldetag: 18.12.2017
(51) Int. Cl.: B23P 19/04, B25B 21/00

(54) **VORRICHTUNG, SYSTEM UND VERFAHREN ZUM AUTOMATISIERTEN ABLÖSEN EINES KLEBEELEMENTS VON EINEM TRÄGERELEMENT**
DEVICE, SYSTEM AND METHOD FOR AUTOMATED DETACHING OF AN ADHESIVE ELEMENT FROM A CARRIER ELEMENT
DISPOSITIF, SYSTÈME ET PROCÉDÉ DE DÉCOLLAGE AUTOMATISÉ D'UN ÉLÉMENT ADHÉSIF D'UN ÉLÉMENT DE SUPPORT

(30) Priorität: 17.02.2017 DE 102017103288
(43) Veröffentlichungstag der Anmeldung: 22.08.2018
(73) Patentinhaber: Sika Technology AG, 6340 Baar (CH)
(72) Erfinder: SANDER, Wolf-Peter, 61130 Nidderau (DE)
(74) Vertreter: Sika Patent Attorneys

(56) Entgegenhaltungen:
- DE-A1-102010 027 378
- DE-A1-102010 051 786

## Beschreibung

Die vorliegende Erfindung betrifft eine Vorrichtung zum automatisierten Ablösen eines Klebeelements von einem Trägerelement, ein System aus einem Manipulator und einer Vorrichtung zum Ablösen eines Klebeelements sowie ein Verfahren zum automatisierten Ablösen eines Klebeelements von einem Trägerelement.

Aus den Druckschriften DE 10 2010 051 786 A1 und DE 10 2010 027 378 A1 sind Verfahren und Vorrichtungen zum automatisierten Aufbringen eines Klebeelements auf einem Fahrzeugbauteil bekannt. Insbesondere handelt es sich hierbei um solche Klebeelemente, beispielsweise in Form von Klebestreifen oder Klebepads, die zum Versiegeln bzw. Verschließen von fertigungsbedingten Öffnungen des Fahrzeugbauteils vorgesehen sind. Zum automatisierten Applizieren auf dem Fahrzeugbauteil ist dabei insbesondere ein Manipulator in eine Fertigungsstraße integriert, um das jeweilige Klebeelement an seinen Bestimmungsort zu überführen. Um den Manipulator wieder mit neuen Klebeelementen zu bestücken, ist es vorgesehen, dass eine Transfer-/Ablageeinrichtung zu einem Manipulator überführt wird. Diese Transfer-/Ablageeinrichtung stellt ein Trägerelement, auf dem Klebeelemente angeordnet sind, bereit, von dem der Manipulator die Klebeelemente wiederum ablöst.

Die DE 10 2010 051 786 A1 offenbart die Merkmale des Oberbegriffes des Anspruchs 1.

Bei diesen bekannten Verfahren und Vorrichtungen besteht das Problem, dass das Klebeelement beim Ablösen vom Trägerelement teilweise beschädigt wird, wenn der Manipulator das Klebeelement mittels eines Vakuumsaugers abzulösen versucht. Auf Grund vorher auftretender Abzugskräfte deformiert sich das Klebeelement, wobei es zum Teil zu Beschädigungen der Klebeflächen kommt. Zum Teil scheitert der Ablösevorgang, weil der Vakuumstrom am Sauggreifer des Manipulators abreißt. Erschwerend kommt hinzu, dass das Trägerelement durch den in der DE 10 2010 051 786 A1 erwähnten Unterdruck auf der Ablagefläche fixiert und festgehalten wird, wodurch es zu einem "Ansaugen" auch des Klebeelements kommt und dieses somit nur erschwert abgenommen werden kann. Auch besteht die Gefahr, dass sich das Oberflächenprofil der Ablagefläche durch den Unterdruck zwischen Trägerelement und Ablagefläche in die klebende Butyloberfläche des Klebeelements überträgt und dieses dadurch beschädigt wird.

Insbesondere bei solchen Klebeelementen, die aus Aluminium in Verbindung mit einer viskosen Butylkautschukmasse gefertigt sind, hat sich herausgestellt, dass regelmäßig ein Teil des Klebeelements am Trägerelement haften bleibt oder sich das Klebeelement gar nicht erst lösen lässt.

Es ist eine Aufgabe der vorliegenden Erfindung, eine Vorrichtung bereitzustellen, mit der die Probleme des Stands der Technik überwunden und das automatisierte Ablösen des Klebeelements von dem Trägerelement, insbesondere mittels eines Manipulators, verbessert wird, insbesondere in Hinblick auf ein möglichst fehlerfreies Ablösen des Klebeelements.

Diese Aufgabe wird gelöst durch eine Vorrichtung zum Ablösen eines Klebeelements gemäß Anspruch 1, durch ein System gemäß Anspruch 9 und ein Verfahren gemäß Anspruch 10. Weitere bevorzugte Vorteile und Merkmale der Erfindung ergeben sich aus den Unteransprüchen sowie der Beschreibung und den beigefügten Figuren.

Erfindungsgemäß ist eine Vorrichtung zum automatisierten Ablösen eines Klebeelements von einem sich entlang einer Haupterstreckungsebene erstreckenden Trägerelement vorgesehen, umfassend
-- eine Ablageeinrichtung zum Ablegen des Trägerelements und
-- eine Fixiereinrichtung zum Fixieren des Trägerelements an der Ablageeinrichtung,
wobei die Fixiereinrichtung und/oder die Ablageeinrichtung derart ausgestaltet sind, dass das fixierte Trägerelement zumindest bereichsweise, insbesondere in einem Bereich mit einem oder mehreren Klebeelementen, beabstandet zur Ablageeinrichtung entlang der Haupterstreckungsebene gespannt ist.

Gegenüber dem Stand der Technik lässt sich mit der erfindungsgemäßen Vorrichtung das Ablösen des Klebeelements von dem Trägerelement unterstützen. Dabei gestattet die gespannte und zu der Ablageeinrichtung beabstandete Anordnung dem Trägerelement, insbesondere in den Bereichen mit den Klebeelementen, eine Bewegungsfreiheit, die sich als hilfreich beim Ablösen, insbesondere Abschälen, des Klebeelements von dem Trägerelement erweist. Beispielsweise lässt sich das Trägerelement während des Zugriffs durch einen Manipulator im Bereich des Klebelements lokal deformieren oder verkippen, was einem Abschälen des Klebeelements zuträglich ist. Unter Abschälen versteht der Fachmann insbesondere, dass sich das Klebeelement sukzessiv bereichsweise vom Trägerelement löst, bis es schließlich vollständig vom Trägerelement getrennt ist. Vorzugsweise beginnt das Abschälen in einem Segment bzw. Kreisbogenabschnitt des äußeren Umfangs des Klebeelements.

In dem Bereich zwischen Trägerelement und Ablageeinrichtung können auch Ausformungen angeordnet werden und zwar sowohl positive Ausformungen, wie beispielsweise Stützelemente, Widerlager oder Ausbuchtungen, als auch negative Ausformungen, wie Ausnehmungen, Nuten, Öffnungen oder Bohrungen, jeweils bevorzugt im Bereich eines Klebeelements, so dass das Trägerelement in diesem Bereich beim Einwirken des Manipulators positiv oder negativ gekrümmt wird, wodurch es zu einem "Abschälen", d. h. zu einem, vom Rand bzw. Zentrum des Klebeelements gesehen, von außen nach innen oder von innen nach außen verlaufenden Abtrennen des Klebeelements vom Trägerelement kommt.

Ein weiterer Vorteil der erfindungsgemäßen Vorrichtung ist es jedoch, dass es nicht unbedingt dieser positiven oder negativen Ausformungen bedarf. So können die Klebeelemente beliebig auf dem Trägerelement verteilt sein und müssen nicht exakt an diese Ausformungen angepasst werden, die an oder auf der Ablageeinrichtung angeordnet und ausgerichtet sind.

Durch die beliebige Anordnung auf dem Trägerelement können die entsprechenden Klebeelemente für ein zu beklebendes Bauteil, wie beispielsweise einer Automobilkarosserie oder eines anderen Industrieprodukts, vorkommissioniert werden, d. h. die unterschiedlichen Größen von Klebeelementen können gemeinsam auf einem Trägerelement beliebig angeordnet und dem Manipulator zur Abnahme zur Verfügung gestellt werden. Selbst bei unterschiedlich zu bestückenden Industrieprodukten kann ein und dieselbe Anordnung dadurch flexibel eingesetzt werden und unterschiedliche Anordnungen von Klebeelementen zur Verfügung stellen.

Besonders bevorzugt ist die Vorrichtung integriert in eine Fertigungsstraße zur Herstellung von Fahrzeugbauteilen, und die Klebeelemente sind z. B. zum Verschließen von fertigungsbedingten Öffnungen im Fahrzeugbauteil vorgesehen. Weiterhin ist es bevorzugt, dass ein Manipulator die Klebeelemente einzeln oder mehrere simultan von dem Trägerelement ablöst. Dabei bewegt sich der Manipulator auf das Trägerelement zu und wird bezüglich der Klebeelemente ausgerichtet. Mittels eines Unterdrucks im Manipulator lässt sich das Klebeelement vom Trägerelement lösen und durch den Manipulator aufnehmen. Hierzu weist der Manipulator zumindest ein Saugelement auf, beispielsweise einen Saugnapf, über das das Klebeelement aufgenommen wird. Vorzugsweise nimmt der Manipulator das Klebeelement mit einem Fügestempel auf, der zum Ablösen verschwenkt wird oder beim Zugriff auf das Klebeelement geneigt ist gegenüber einer senkrecht zur Haupterstreckungsebene des gespannten Trägerelements verlaufenden Richtung. Weiterhin ist es bevorzugt vorgesehen, dass das Klebeelement Aluminium in Verbindung mit einer viskosen Butylkautschukmasse umfasst. Für solche Klebeelemente erweist sich das Ablösen vom Trägerelement als besonders vorteilhaft, d. h. es hat sich herausgestellt, dass sich eine vergleichsweise hohe Erfolgsquote für das Ablösen des Klebeelements vom Trägerelement realisieren lässt.

Weitere Vorteile und Merkmale ergeben sich aus der nachfolgenden Beschreibung bevorzugter Ausführungsformen des erfindungsgemäßen Gegenstands mit Bezug auf die beigefügten Figuren.

Gemäß einer weiteren Ausführungsform der vorliegenden Erfindung ist es vorgesehen, dass die Vorrichtung eine Gasdruckeinrichtung zur Erzeugung eines Überdrucks oder Unterdrucks in einem Zwischenbereich zwischen der Ablageeinrichtung und dem Trägerelement, insbesondere dem gespannten Trägerelement, aufweist. Dadurch lässt sich in vorteilhafter Weise der Zwischenbereich zwischen der Ablageeinrichtung und dem Trägerelement derart manipulieren, dass sich das Ablösen des Klebeelements vom Trägerelement auf diese Weise weiter unterstützen lässt.

Sofern ein Unterdruck erzeugt wird, sind nach einer Variante der Erfindung Stützelemente vorgesehen, die als Widerlager bzw. Gegenlager für die Klebelemente wirken und so das Ablösen. bis hin zur vertikalen Abnahme der Klebelemente vereinfachen. Hierzu sind die Stützelemente in einer senkrecht zur Haupterstreckungsebene verlaufenden Richtung unterhalb der Klebeelemente angeordnet. Es ist auch vorstellbar, dass das Trägerelement in einem Ansaugbereich an die Ablageeinrichtung lokal durch den Unterdruck angesaugt wird, und dadurch das Trägerelement zwischen dem Ansaugbereich und einem Bereich, in dem das Trägerelement in dessen Randbereich fixiert ist, gespannt wird. Dadurch lässt sich das Trägerelement geneigt und beabstandet zu einer Oberflächenseite der Ablageeinrichtung ausrichten. Dabei entsteht insbesondere bei einem Überdruck im Zwischenbereich zwischen Ablageeinrichtung und Trägerelement ein Gaskissen, insbesondere ein Luftkissen, das das Ablösen des Klebeelements vom Trägerelement vorteilhaft unterstützt. Vorzugsweise wird ein Druck zwischen 0,5 und 5 bar, bevorzugt zwischen 0,8 und 2,5 bar und besonderes bevorzugt von 2 bar eingestellt. Dadurch lässt sich in vorteilhafter Weise eine ausreichende Spannung im Trägerelement erzeugen, mit der einerseits eine Beabstandung des Trägerelements zur Ablageeinrichtung gewährleistet und andererseits eine ausreichende Deformation, die die nötige Bewegungsfreiheit des Trägerelements sicherstellt, zugelassen werden kann.

Vorzugsweise handelt es sich bei dem Gas um Luft, die zur Unterstützung des Ablösens des Klebeelements vom Trägerelement dem Zwischenbereich zwischen der Ablageeinrichtung und dem Trägerelement zugeführt oder entnommen wird. Ein weiterer Vorteil der Nutzung eines Überdrucks ist, dass es nach einer weiteren Variante der Erfindung keiner Widerlager bzw. Gegenlager, d. h. Ausformungen für die jeweiligen Klebeelemente bedarf. So können die Klebeelemente beliebig auf dem Trägerelement verteilt sein und müssen nicht angepasst an etwaige Widerlager bzw. Stützelemente an der Ablageeinrichtung ausgerichtet sein, wodurch in vorteilhafter Weise eine automatisierte Vorkommissionierung der Klebeelemente am Trägerelement möglich ist. Zudem lassen sich durch die Widerlager verursachte Schäden oder Deformationen an den Klebeelementen vermeiden. Beispielsweise handelt es sich bei der Gasdruckeinrichtung um eine Pumpe, beispielsweise eine Vakuumpumpe, oder ein Gebläse. Weiterhin ist es bevorzugt vorgesehen, dass die Vorrichtung eine Steuervorrichtung umfasst, mit der sich der Druck innerhalb des Bereichs zwischen dem Trägerelement und der Ablageeinrichtung einstellen bzw. regeln lässt. Weiterhin ist es bevorzugt vorgesehen, dass sich das fixierte bzw. gespannte Trägerelement im Wesentlichen parallel zu einer Seitenfläche bzw. Außenseite der Ablageeinrichtung erstreckt.

Zweckmäßig ist es vorgesehen, dass die Ablageeinrichtung einen Kanal oder ein Kanalsystem aufweist, wobei der Kanal oder das Kanalsystem die Gasdruckeinrichtung und den Zwischenbereich zwischen der Ablageeinrichtung und dem Trägerelement miteinander verbindet. Mittels des in die Ablageeinrichtung integrierten Kanals bzw. Kanalsystems lässt sich unmittelbar der Druck im Zwischenbereich zwischen Trägerelement und Ablageeinrichtung zielgerichtet einstellen. Dabei erweist sich ein Kanalsystem insbesondere dahingehend als vorteilhaft, als sich damit gleichmäßig ein Druckaufbau realisieren lässt. Vorzugsweise sind die Ausgangsöffnungen des Kanals oder des Kanalsystems auf der dem gespannten bzw. fixierten Trägerelement zugewandten Seite der Ablageeinrichtung angeordnet. Insbesondere ist es vorgesehen, dass die Fixiervorrichtung das Trägerelement entlang einer parallel zur Haupterstreckungsebene verlaufenden Spannrichtung zwischen zwei Kontaktbereichen aufspannt, wobei das Kanalsystem oder der Kanal in einer der Spannrichtung folgenden Richtung zwischen den zwei Kontaktbereichen angeordnet ist.

Vorzugsweise umfasst die Fixiereinrichtung einen Spann- oder Klemmrahmen oder eine Zug- bzw. Spanneinrichtung. Mittels des Spann- oder Klemmrahmens lässt sich nicht nur ein einfaches Verschließen realisieren, sondern der Spann- oder Klemmrahmen erlaubt es zudem, das Trägerelement entlang aller möglichen parallel zur Haupterstreckungsebene verlaufenden Spannrichtungen gleichmäßig aufzuspannen. Vorzugsweise umfasst der Spannrahmen ein spannrahmenseitiges Dichtelement, insbesondere ein umlaufendes Dichtelement wie einen Dichtring oder O-Ring. Dabei ist die Fixiervorrichtung derart gestaltet, dass das Trägerelement zum Fixieren zwischen dem spannrahmenseitigen Dichtelement und einem ablageeinrichtungsseitigen Dichtelement angeordnet ist und durch eine zwischen dem spannrahmenseitigen Dichtelement und dem ablageeinrichtungsseitigen Dichtelement wirkende Presskraft das Trägerelement fixiert bzw. gespannt wird. Vorzugsweise sind das spannrahmenseitige Dichtelement und das ablageeinrichtungsseitige Dichtelement jeweils innerhalb einer Nut angeordnet, um ein seitliches Verrutschen der Dichtelemente im Presszustand zu verhindern. Um eine Spannung auf das Trägerelement auszuüben, ist das spannrahmenseitige Dichtelement mit Vorteil größer als das ablageeinrichtungsseitige Dichtelement oder umgekehrt, wobei das spannrahmenseitige Dichtelement und das ablageeinrichtungsseitige Dichtelement derart zueinander versetzt angeordnet sind, dass das zwischen den beiden Dichtelementen angeordnete Trägerelement beim Verpressen der beiden Dichtelemente gegeneinander verbogen bzw. deformiert wird und eine Scherkraft in Richtung der Spannrichtung ausgebildet wird.

Vorzugsweise sind das spannrahmenseitige Dichtelement und das ablageeinrichtungsseitige Dichtelement hierzu konzentrisch angeordnet und ein Innendurchmesser des dabei innenliegenden Dichtelements und ein Innendurchmesser des dabei außenliegenden Dichtelements unterscheiden sich um 0,2 bis 0,9 , bevorzugt zwischen 0,3 und 0,8 und besonders bevorzugt um 0,5 und 0,8 der in Spannrichtung bemessenen Breite des Ringquerschnitts des innenliegenden Dichtelements. Dadurch lässt sich sicherstellen, dass der Versatz beim Zusammenpressen des spannrahmenseitigen und des ablageeinrichtungsseitigen Dichtelements eine ausreichend große bzw. gewünschte Spannung einstellen lässt. Weiterhin ist es bevorzugt vorgesehen, dass der Spann- oder Klemmrahmen einen Randbereich des Trägerelements verklemmt. Der Randbereich des Trägerelements beträgt vorzugsweise 5 bis 25 mm, bevorzugt 10 bis 18 mm und besonders bevorzugt im Wesentlichen 15 mm.

Weiterhin ist es vorstellbar, dass die Spannung mittels einer Zug- bzw. Spanneinrichtung hervorgerufen wird. Dabei ist die Zug- bzw. Spanneinrichtung derart ausgestaltet, dass sie eine Kraft entlang einer parallel zur Haupterstreckungsebene verlaufenden Richtung veranlasst und dadurch eine Spannung im Trägerelement verursacht. Beispielsweise umfasst die Zug- oder Spanneinrichtung ein Wickelelement, auf das das Trägerelement zum Verspannen aufgewickelt wird. Denkbar ist auch, dass das Trägerelement mittels Linearmotoren gespannt wird. Ferner ist es auch vorstellbar, dass das Trägerelement parallel über die Ablageeinrichtung verlaufend ausgerichtet wird und durch ein Verschieben der Ablageeinrichtung in Richtung des Trägerelements eine Spannung im Trägerelement hervorgerufen wird. Hierbei wird das Trägerelement bevorzugt wiederum auf ablageeinrichtungsseitige Dichtelemente abgelegt und zwischen diesen verspannt. Insbesondere ist es vorgesehen, dass in einem Zwischenbereich zwischen der Ablageeinrichtung und dem Trägerelement ein Unterdruck und/oder ein Überdruck erzeugt wird, wenn das Trägerelement mittels der Zug- bzw. Spanneinrichtung oder durch den Versatz der Ablageeinrichtung aufgespannt wird.

Das Trägerelement kann also über der Ablageeinrichtung derart beabstandet aufgespannt werden, indem eine Fixiereinrichtung das Trägerelement beispielsweise von einer Rolle abrollt oder mittels Klammern am Außenbereich, d. h. am äußeren Randbereich der Ablageeinrichtung, festspannt und der Spann- oder Klemmrahmen von unten aus der Ablageeinrichtung in Richtung des Trägerelements bewegt wird, so dass die ablageeinrichtungsseitigen Dichtelemente oder auch nur die ablageeinrichtungsseitigen Spannelemente das Trägerelement von der Ablageeinrichtung beabstandet und aufspannt, da die Randbereiche des Trägerelements vorher bereits festgesetzt wurden.

Denkbar ist aber auch, das Trägerelement als Bogen oder Blatt auszuführen und diesen Bogen auf der Ablageeinrichtung am Rand zu fixieren (beispielsweise mit Klemmleisten). Ein Spann- oder Klemmrahmen fährt dann mit einem umlaufenden Rand aus der Ablageeinrichtung heraus und spannt so das Trägerelement, das eine gewisse Elastizität aufweist, beabstandet über der Ablageeinrichtung auf. Mittels eines Unterdrucks kann die Vorspannung des Trägerelements weiter erhöht werden, indem der Unterdruck zwischen Trägerelement und der Ablageeinrichtung der Bewegungsrichtung des Spann- oder Klemmrahmens entgegenwirkt und die Spannung des Trägerelements weiter erhöht. Die innerhalb oder unterhalb der Ablageeinrichtung angeordnete Variante des Spann- oder Klemmrahmens hat den Vorteil, dass der Manipulator die Klebeelemente vom Trägerelement problemlos abheben kann, ohne mit einem von oben aufbringbaren Klemm- oder Spannrahmen zu kollidieren. "Oben" in diesem Sinne heißt auf der Seite des Trägerelements, auf der der Manipulator zugreift, "unten" ist die gegenüberliegende Seite.

Der Spann- oder Klemmrahmen muss dabei nicht notwendigerweise umlaufend sein, es ist auch möglich, das Trägerelement lediglich an zwei oder drei Stellen aufzuspannen, so dass ein Abstand zwischen Ablageeinrichtung und Trägerelement entsteht. Gleichfalls ist es möglich, das Trägerelement auf der Ablageeinrichtung mittels einer Fixiereinrichtung zu befestigen, insbesondere an den Rändern der Ablageeinrichtung und diese Fixierung gasdicht derart vorzunehmen, dass ein Spann- oder Klemmrahmen oder entsprechende Spann- oder Klemmleisten aufgesetzt werden, so dass es zu einer jedenfalls am Rand der Ablageeinrichtung gasdichten Verbindung zwischen Ablageeinrichtung und Trägerelement kommt und im Anschluss daran ein Überdruck zwischen Trägerelement und Ablageeinrichtung, beispielsweise mittels Einströmen eines Gases, erzeugt wird, so dass sich das Trägerelement von der Ablageeinrichtung flexibel abhebt und sich von dieser beabstandet.

In einer weiteren Ausführungsform der vorliegenden Erfindung ist es vorgesehen, dass die Vorrichtung einen automatisierbaren Manipulator, insbesondere Sauggreifer mit einem Fügestempel oder ein Sterngreifer-Fügesystem, zur Aufnahme der Klebeelemente vom Trägerelement aufweist.

Gemäß einer weiteren Ausführungsform der vorliegenden Erfindung ist vorgesehen, dass die Fixiervorrichtung einen Hebelmechanismus, insbesondere einen Kniehebelmechanismus, zum Verpressen der Fixiervorrichtung und damit jedenfalls der Ränder des Trägerelements gegen die Ablageeinrichtung aufweist. Dadurch lässt sich auf einfache Weise eine Presskraft bereitstellen, mit der sich das Trägerelement an der Ablageeinrichtung fixieren und spannen lässt.

Besonders bevorzugt ist es vorgesehen, dass die Vorrichtung eine Sensoreinrichtung, insbesondere eine Kamera, zur Erfassung der Position der Klebeelemente auf dem Trägerelement aufweist. Mittels der Sensoreinrichtung lässt sich eine möglichst genaue Erfassung der aktuellen Verteilung und Position der Klebeelemente auf dem Trägerelement realisieren. Dies erweist sich insbesondere bei der vorgesehenen Vorrichtung insofern als vorteilhaft, als durch die Wechselwirkung mit dem Manipulator und durch das Aufspannen des Trägerelements im Betriebsablauf Deformationen oder Verschiebungen zwischen den Klebeelementen auftreten können. Zudem erlaubt die Sensoreinrichtung die Nutzung von verschiedenen Verteilungen von Klebeelementen auf dem Trägerelement. Dadurch lässt sich die Vorrichtung unabhängig von der Anordnung der Klebeelemente auf dem Trägerelement in vorteilhafter Weise nutzen.

In einer weiteren Ausführungsform der vorliegenden Erfindung ist es vorgesehen, dass die Ablageeinrichtung und/oder die Fixiervorrichtung eine Zentrierhilfe zur Ausrichtung des Trägerelements auf der Ablageeinrichtung aufweist. Mittels der Zentrierhilfe lässt sich das Trägerelement beim Ablegen des Trägerelements in vorteilhafter Weise ausrichten, bevor es mittels der Fixiervorrichtung fixiert wird. Dadurch werden die Reproduzierbarkeit und damit die Prozesssicherheit beim automatisierten Ablegen des Trägerelements in vorteilhafter Weise erhöht. Beispielweise handelt es sich bei der Zentrierhilfe um einen Stift oder Bolzen, die von der Ablageeinrichtung abstehen. Über entsprechende Lochungen im Trägerelement lässt sich dann das Trägerelement positionsgenau auf der Ablageeinrichtung platzieren.

Zweckmäßig ist es vorgesehen, dass die Ablageeinrichtung ein Überdruckventil und/oder Ausformungen im Zwischenbereich zwischen der Ablageeinrichtung und dem Trägerelement aufweist. Mittels des Überdruckventils lässt sich in vorteilhafter Weise sicherstellen, dass im Zwischenbereich zwischen der Ablageeinrichtung und dem Trägerelement kein kritischer Druck überschritten wird, bei dem beispielsweise das Trägerelement beschädigt wird oder seine Bewegungsfreiheit für ein optimiertes Abschälen zu sehr eingeschränkt ist. Bei den Ausformungen handelt sich vorzugsweise um Ausnehmungen, wie z. B. Nuten oder Rillen, oder um Stützelemente. Solche Ausnehmungen sind vorzugsweise in einer senkrecht zur Haupterstreckungsebene des Trägerelements verlaufenden Richtung unterhalb der Klebelemente, vorzugsweise jeweils unter einem Klebeelement angeordnet. Insofern es sich um ein Stützelement handelt, bildet dieses bevorzugt ein Gegenlager, das den Manipulator beim Abschälen des Klebeelements vom Trägerelement unterstützt. Im Falle der Ausnehmungen, also negativen Ausformungen, wird dem Trägerelement unterhalb des Klebelements ein Zwischenbereich bereitgestellt, der das Abschälen vereinfacht. Dabei ist es vorstellbar, dass das Abschälen in einem Zentrum des Klebeelements beginnt. Vorzugsweise sind die Ausformungen kleiner als die Klebelemente auf dem Trägerelement.

Ein weiterer Gegenstand der vorliegenden Erfindung ist ein System aus Manipulator und einer erfindungsgemäßen Vorrichtung zum Ablösen eines Klebeelements vom Trägerelement. Alle für die erfindungsgemäße Vorrichtung zum Ablösen eines Klebeelements beschriebenen Merkmale und deren Vorteile lassen sich sinngemäß ebenfalls auf das erfindungsgemäße System übertragen und andersherum.

Insbesondere handelt es sich bei dem Manipulator um die Vorrichtung aus der Druckschrift DE 10 2010 051 786 A1.

Ein weiterer Gegenstand der vorliegenden Erfindung ist ein Verfahren zum automatisierten Ablösen eines Klebeelements von einem Trägerelement umfassend die Verfahrensschritte:
-- Fixieren und Spannen des Trägerelements auf einer Ablageeinrichtung mittels einer Fixiereinrichtung unter Ausbildung eines Abstand zwischen der Ablageeinrichtung und dem Trägerelement und
-- Ablösen, insbesondere Abschälen, des Klebeelements von dem Trägerelement mittels eines Manipulators.

Alle für die erfindungsgemäße Vorrichtung zum Ablösen eines Klebeelements beschriebenen Merkmale und deren Vorteile lassen sich sinngemäß ebenfalls auf das erfindungsgemäße Verfahren übertragen und andersherum. Vorzugsweise umfasst das Verfahren zusätzlich den Verfahrensschritt: Erzeugen eines Überdrucks oder Unterdrucks mittels einer Gasdruckeinrichtung in einem Zwischenbereich zwischen der Ablageeinrichtung und dem Trägerelement.

Es zeigt:
- **Fig.1:**: eine Vorrichtung zum Ablösen eines Klebeelements von einem Trägerelement
- **Fig.2:**: eine Vorrichtung zum Ablösen eines Klebeelements von einem Trägerelement gemäß einer ersten bevorzugten Ausführungsform der vorliegenden Erfindung
- **Fig.3a bis 3e:**: ein Verfahren zum automatisierten Ablösen eines Klebeelements von einem Trägerelement gemäß einer zweiten bevorzugten Ausführungsform der vorliegenden Erfindung
- **Fig.4a bis 4c:**: eine Vorrichtung zum automatisierten Ablösen eines Klebeelements von einem Trägerelement gemäß einer dritten bevorzugten Ausführungsform der vorliegenden Erfindung.

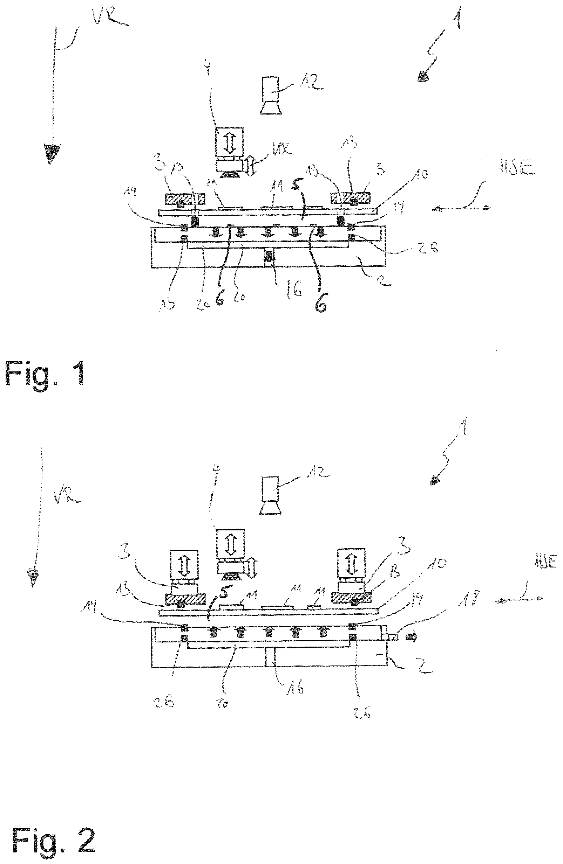

In **Figur 1** ist eine Vorrichtung 1 zum automatisierten Ablösen eines Klebeelements 11 von einem Trägerelement 10 gemäß einer beispielhaften Ausführungsform dargestellt. Insbesondere handelt es sich hierbei um eine Vorrichtung, die dazu vorgesehen ist in einer Fertigungsstraße einem Manipulator 4, wie z. B. einem Roboter und/oder einem Sternengreifer, Klebeelemente 11 derart bereitzustellen, dass der Manipulator 4 das Klebeelement 11 aufnehmen und an einem Werkstück oder Fertigungsprodukt applizieren kann.

Beispielsweise handelt es sich bei dem Werkstück bzw. Fertigungsprodukt um ein Karosserieteil für ein Fahrzeug und das Klebeelement 11, vorzugsweise in Form eines Pads oder Klebestreifen, dient einem Verschluss bzw. einer Versiegelung einer fertigungsbedingten Öffnung im Karosserieteil. Insbesondere werden die Klebeelemente 11 dem Manipulator 4 hierbei auf dem Trägerelement 10 bereitgestellt. Beispielsweise sind die Klebeelemente 11 dabei äquidistant bzw. schachbrettartig zueinander angeordnet. Zum Ablösen des Klebeelements 11 wird vorzugsweise ein Unterdruck im Manipulator 4, insbesondere in einem Fügestempel des Manipulators 4, erzeugt.

Mittels dieses Unterdrucks wird das Klebeelement 11 vom Trägerelement 10 gelöst und vom Manipulator 4 aufgenommen. Um das Ablösen vom Trägerelement 10 zu erleichtern und damit die Prozesssicherheit beim Übertragen des Klebeelements 11 vom Trägerelement 10 zum Werkstück zu erhöhen, ist es vorgesehen, dass die Vorrichtung 1 zum Ablösen des Klebeelements 11 vom Trägerelement 10 eine Ablageeinrichtung 2 zum Ablegen des Trägerelements 10 und eine Fixiervorrichtung 3 zum Fixieren des Trägerelements 10 aufweist. Um ein Ablösen, insbesondere ein Abschälen, des Klebeelements 11 zu begünstigen, ist insbesondere eine Gasdruckeinrichtung (nicht dargestellt) vorgesehen, die in einem Bereich 5 zwischen der Ablageeinrichtung 2 und dem an der Ablageeinrichtung 2 fixierten Trägerelement 10 einen Gasdruck kontrolliert bzw. einstellt. Weiterhin können Ausformungen 6 vorgesehen sein, die für ein Aufwölben des Trägerelements beim Abheben sorgen und somit ein Ablösen bzw. Abschälen des Klebeelements begünstigen.

In der in Figur 1 dargestellten Ausführungsform handelt es sich bei der Fixiervorrichtung 3 um einen Spann- bzw. Klemmrahmen mit einem spannrahmenseitigen Dichtungselement 13, insbesondere einem Dichtungsring bzw. O-Ring. Zum gasdichten Verschließen des Bereichs zwischen der Ablageeinrichtung 2 und dem Trägerelement 10 wird der Spannrahmen dabei entlang einer Verschlussrichtung VR bewegt bis die Vorrichtung 1 in einen das Trägerelement 10 fixierenden Fixierzustand überführt ist. Im Fixierzustand ist das Trägerelement 10, insbesondere ein Randbereich des Trägerelements, zwischen dem spannrahmenseitigen Dichtelement 13 und einem ablageeinrichtungsseitigen Dichtelement 14, insbesondere Dichtring oder O-Ring, eingeklemmt bzw. verpresst.

Vorzugsweise ist das ablageeinrichtungsseitige Dichtelement 14 derart angeordnet bzw. ausgestaltet, dass es im Fixierzustand gegenüber dem spannrahmenseitigen Dichtelement 13 in einer senkrecht zu Verschlussrichtung VR verlaufenden Richtung um einen Abstand A versetzt ist. Beispielsweise beträgt der Abstand A einen Wert, der kleiner ist als ein in derselben Richtung bemessener Halbmesser des ablageeinrichtungsseitigen Dichtelements 14 oder des spannrahmenseitigen Dichtelements 13. Dadurch lässt sich sicherstellen, dass das spannrahmenseitige Dichteelement 13 und das ablageeinrichtungsseitige Dichtelement 14 im Fixierzustand gegeneinander gepresst werden können und das Trägerelement 10 zur Erhöhung der Spannung im Trägerelement 10 in seinem Randbereich um eines der Dichtelemente, d. h. das ablageeinrichtungsseitige Dichtelements 14 oder das spannrahmenseitige Dichtelement 13, umgeknickt werden kann. Beispielsweise sind das spannelementseitige Dichtelement 13 und das ablageeinrichtungsseitige Dichtelement 14 in einer senkrecht zur Verschlussrichtung VR verlaufenden Richtung zwischen 0,25 mm und 0,8 mm, bevorzugt zwischen 0,3 mm und 0,6 mm und besonderes bevorzugt im Wesentlichen 0,5 mm voneinander im Fixierzustand beabstandet. Vorzugsweise ist hierbei zur Bemessung des Abstands A der Abstand der Zentren der beiden Dichtelemente oder die jeweiligen Randverläufe maßgeblich. Alternativ handelt es sich bei der Fixiervorrichtung 3 um eine Zug- oder Spanneinrichtung, mittels der eine parallel zur Haupterstreckungsebene bzw. vertikale Kraft zum Spannen des Trägerelements aufgebracht wird.

Um das Trägerelement 10 auf der Ablageeinrichtung 2 zu positionieren bzw. auszurichten, ist vorzugsweise eine Zentrierhilfe 15 vorgesehen. Beispielsweise handelt es sich bei der Zentrierhilfe 15 um entlang der Verschlussrichtung VR von der Ablageeinrichtung 2 abstehende Stifte bzw. Bolzen, deren in einer senkrecht zur Verschlussrichtung VR bemessener Querschnitt abgestimmt ist mit Löchern bzw. Ausnehmungen 19 in dem Trägerelement 10. Mit anderen Worten: Das Trägerelement 10 umfasst eine oder mehrere Ausnehmungen 19, die passgenau zu entsprechend ausgestalteten Zentrierhilfen 15 an der Ablageeinrichtung 2 ausgestaltet sind. Über die Ausnehmungen 19 lässt sich das Trägerelement 10 auf die Zentrierelemente 15 aufziehen, wodurch das Trägerelement 10 ausgerichtet wird. Auch die Ausformungen 6 liegen dann korrekt unterhalb der Klebeelemente 11. Um die aktuelle Position der Klebeelemente 11 zu erfassen, ist weiterhin eine Sensoreinrichtung, vorzugsweise eine Kamera 12, vorgesehen. Dadurch lässt sich auf einfache Weise erfassen, welche Klebeelemente 11 bereits vom Trägerelement 10 entfernt worden sind und an welcher Position zum aktuellen Zeitpunkt dem Manipulator 4 auf dem Trägerelement 10 ein oder mehrere Klebeelemente 11 bereitgestellt werden.

In der in Figur 1 dargestellten Ausführungsform ist es ferner vorgesehen, dass in dem Bereich 5 zwischen der Ablageeinrichtung 2 und dem fixierten Trägerelement 10 ein Unterdruck erzeugt wird, insbesondere während der Manipulator 4 das Klebeelement 11 vom Trägerelement 10 ablöst. Dabei ist es vorstellbar, dass der Unterdruck unmittelbar zeitlich vor einem Zugriff des Manipulators 4 auf das Trägerelement 10 bzw. das Klebeelement 11 aufgebaut wird und/oder unmittelbar zeitlich nach dem Zugriff durch den Manipulator 4 wieder abgebaut wird. Alternativ ist es vorstellbar, dass der Unterdruck zeitlich über mehrere Zugriffe des Manipulators 4 im Wesentlichen konstant gehalten wird. Zur Einstellung des Unterdrucks ist ein Kanal 16 vorgesehen, der bevorzugt mit einer Gasdruckeinrichtung, beispielsweise einer Pumpe, insbesondere einer Vakuumpumpe, verbunden ist. Weiterhin ist es vorgesehen, dass die Ablageeinrichtung 2 einen rückspringenden bzw. topfförmigen Verlauf aufweist, in den ein Einsatz 17 eingelassen ist, wobei der Einsatz eine Vielzahl von Einzelkanälen aufweist, die zusammen mit dem Kanal 16 ein Kanalsystem bilden, um über die Außenseite der Ablageeinrichtung bzw. des Einsatzes gesehen den Gasdruck gleichmäßig einzustellen. Weiterhin sind der Einsatz 17 und die Ablageeinrichtung 2 derart ausgestaltet, dass sich im Kanalsystem, d. h. zwischen dem Kanal 16 und den Einzelkanälen eine Kammer 20 ausbildet. Ferner ist es vorgesehen, dass die Ablageeinrichtung 2 derart ausgestaltet ist, dass das Trägerelement 10 im fixierten Zustand zumindest bereichsweise kontaktfrei zur Ablageeinrichtung 2 angeordnet ist oder vereinzelt auf ausgebildeten Stützelementen 22 aufliegt.

In der **Figur 2** ist eine Vorrichtung 1 zum Ablösen eines Klebeelements 11 von einem Trägerelement 10 gemäß einer ersten bevorzugten Ausführungsform der vorliegenden Erfindung dargestellt. Die Vorrichtung 1 unterscheidet sich im Wesentlichen von der Vorrichtung aus Figur 1 dahingehend, dass hierein Überdruck statt eines Unterdrucks in dem Bereich 5 zwischen der Ablageeinrichtung 2 und dem Trägerelement 10 eingestellt wird. Dazu wird Gas, insbesondere Luft, in den Bereich 5 zwischen der Ablageeinrichtung 2 und dem fixierten Trägerelement 10 eingeleitet. Dadurch bildet sich in vorteilhafter ein Luftkissen unterhalb des Trägerelements 10, wobei das Luftkissen das Ablösen des Klebeelements 11 begünstigt. Entsprechend kann in vorteilhafter Weise auf Stützelemente 22 oder Ausformungen 6 verzichtet werden. Um zu verhindern, dass das Trägerelement 10, insbesondere beim Zugriff durch den Manipulator, reißt oder beschädigt wird, ist ein Überdruckventil 18 vorgesehen, über das das Gas im Zwischenbereich zwischen Ablageeinrichtung 2 und Trägerelement 10 entweichen kann, wenn der Überdruck einen kritischen Bereich überschreitet. Weiterhin ist es vorgesehen, dass der Spannrahmen über eine automatisierte Hubvorrichtung (nicht dargestellt) bewegbar ist. Dadurch lässt sich der Spannrahmen in vorteilhafter Weise mittels der Hubvorrichtung entlang der Verschlussrichtung VR absenken und so automatisiert in den Fixierzustand überführen.

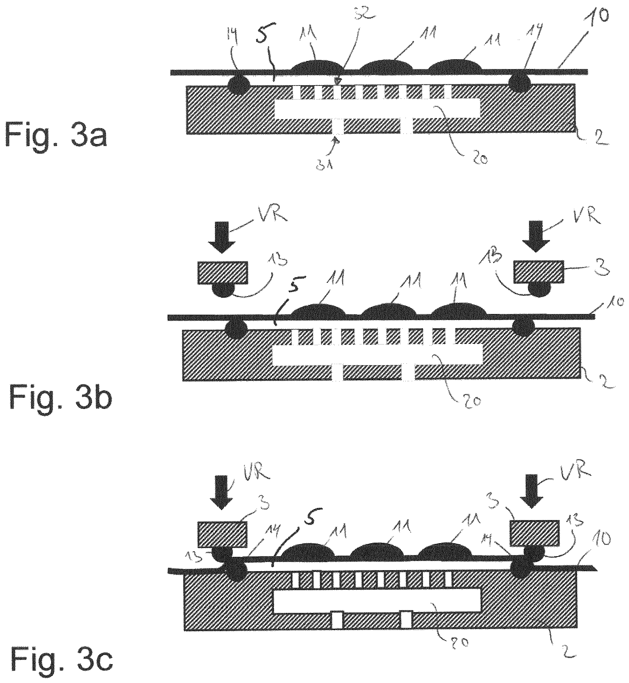

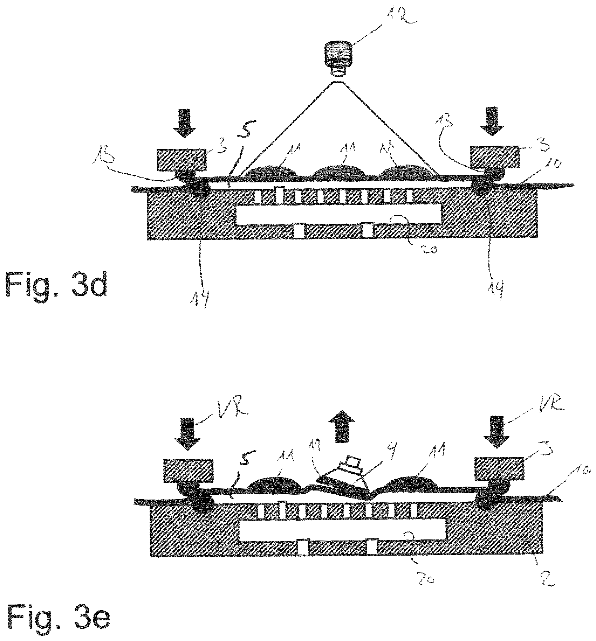

In den **Figuren 3a bis 3e** ist schematisch ein Verfahren zum Ablösen des Klebeelements 11 vom Trägerelement 10 gemäß einer zweiten beispielhaften Ausführungsform der vorliegenden Erfindung dargestellt. Hierbei ist es vorgesehen, dass in einem ersten Schritt, illustriert in Figur 3a, das Trägerelement 10 mit seinen Klebeelementen 11 in einer parallel zur Verschlussrichtung VR verlaufenden Richtung gesehen oberhalb der Auflageeinrichtung 2 angeordnet wird. Dabei kontaktiert das Trägerelement 10, vorzugsweise ausschließlich, das oder die ablageeinrichtungsseitigen Dichtelemente 14. Unterhalb des Trägerelements 10 ist in die Ablageeinrichtung 2 ein Kanalsystem mit einer Mehrzahl an Eingangsöffnungen 31 und einer Mehrzahl an Ausgansöffnungen 32 vorgesehen, wobei insbesondere die Anzahl der Ausgangsöffnungen 32 größer ist als die Anzahl der Eingangsöffnungen 31. Die Ausgangsöffnungen 32 sind ferner im Fixierzustand dem fixierten Trägerelement 10 zugewandt und gleichmäßig auf der Ablageeinrichtung 2 verteilt. Dadurch lässt sich in vorteilhafter Weise ein gleichmäßiges Luft- bzw. Gaskissen unterhalb des Trägerelements 10 realisieren.

Nach dem Anordnen des Trägerelements 10 oberhalb der Ablageeinrichtung 2 ist es vorgesehen, dass eine Fixiervorrichtung 3, insbesondere in Form eines Spannrahmens, entlang der Verschlussrichtung VR, abgesenkt wird (siehe Figur 3b) bis das Trägerelement 10 zwischen den spannrahmenseitigen Dichtelementen 13 und den ablageeinrichtungsseitigen Dichtelementen 14 verklemmt ist. In der Figur 3c ist zu erkennen, dass das spannrahmenseitige Dichtelement 13 und das ablageeinrichtungsseitige Dichtelement 14 derart zueinander ausgerichtet sind, dass im fixierten Zustand eine Scherkraft auf einen Abschnitt des Trägerelements 10 mit dem Klebeelementen 11 wirkt. Insbesondere ist das Trägerelement 10 durch eine zwischen den Dichtelementen wirkende Verschlusskraft bzw. Verpressung verformt, insbesondere abgeknickt. In einem anschließenden Verfahrensschritt erfasst eine Sensoreinheit, insbesondere eine Kamera 12 die Position der Klebeelemente 11, so dass schließlich der Manipulator 4 gezielt zu einem der Klebeelemente 11 zu dessen Aufnahme überführt werden kann. Mittels eines Fügestempels lässt sich dann das oberhalb des Luft- bzw. Gaskissens angeordnete Klebeelement 11 von dem Trägerelement 10 ablösen. Hierbei wird dem Fügestempel ein Unterdruck bereitgestellt, mit dem das Klebeelement 11 angesaugt werden kann. Vorzugsweise wird der Fügestempel dabei beim Lösen des Klebeelements 11 verschwenkt oder geneigt zu dem Klebeelement 11 geführt. Zusammen mit dem Luftkissen unterhalb des Klebeelements 11 ist dadurch in vorteilhafter Weise das Klebeelement 11 von dem Trägerelement 10 abzuschälen, d. h. das Klebeelement 11 wird sukzessive bereichsweise vom Trägerelement 10 gelöst bis es schließlich gänzlich getrennt ist vom Trägerelement 10. Dadurch lässt sich die Wahrscheinlichkeit für einen Fehlversuch, bei dem das Klebeelement 11 nicht vom Trägerelement 11 gelöst wird, reduzieren.

Nach einer alternativen Ausführungsform gemäß den Figuren 3a-3e kann auf den von oben abgesenkten Spann- bzw. Klemmrahmen verzichtet werden, der als Teil des Fixiervorrichtung 3 dient, sondern stattdessen können auch die ablageeinrichtungsseitigen Dichtelemente 14 in einem in der Ablageeinrichtung verschiebbaren Rahmen gelagert sein und nach oben in Richtung des Trägerelements 10 verschoben werden, sofern das Trägerelement 10 mittels einer Fixiervorrichtung 3 am Rand der Ablageeinrichtung fixiert wurde. Dies können Klammern, Leisten, Dichtelemente oder andere Elemente sein, die das Trägerelement 10 am Rand der Ablageeinrichtung 2 fixieren. Durch das Herausfahren der ablageeinrichtungsseitigen Dichtelemente 14 wird das Trägerelement 10 gespannt. Dies kann durch einen Unterdruck unterstützt werden, der jedoch nicht so hoch sein sollte, dass das Trägerelement 10 soweit angesaugt wird, dass es die Ablageeinrichtung 2 berührt.

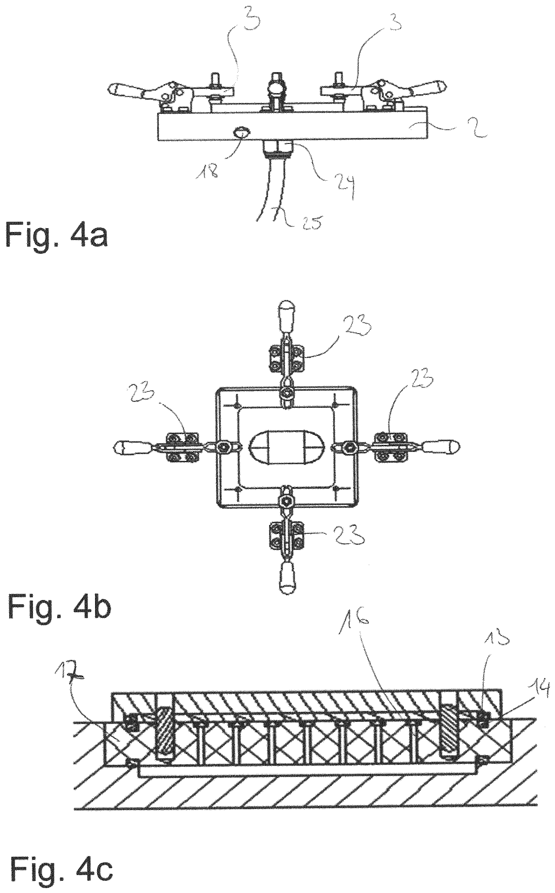

In den **Figuren 4a bis 4c** ist eine Vorrichtung zum automatisierten Ablösen eines Klebeelements 11 von einem Trägerelement 10 gemäß einer dritten bevorzugten Ausführungsform der vorliegenden Erfindung dargestellt. Zusätzlich zu den Ausführungsformen aus den vorangegangenen Figuren sind hier mehrere Fixiervorrichtungen 3 vorgesehen, die mittels eines Hebelmechanismus, beispielsweise eines Kniehebelmechanismus 23, in den Fixierzustand überführbar sind (siehe Schnittansicht 4a). Insbesondere ist die Ablageeinrichtung 2 in einer senkrecht zur Verschlussrichtung VR gesehenen Ebene quadratisch (siehe Draufsicht in Figur 4b) oder rechteckig ausgestaltet und an jeder Seite des Rechtecks oder des Quaders ist ein Hebelmechanismus vorgesehen. Vorzugsweise ist der jeweilige Hebelmechanismus dabei in der Mitte jeder Seite vorgesehen, so dass sich eine gleichmäßige Klemmkraft für den Fixierzustand mit der Fixiervorrichtung erzielen lässt. Weiterhin ist es vorgesehen, dass die Ablageeinrichtung 2 eine Anschlussvorrichtung 24 umfasst, an die ein Schlauch 25 zur Verbindung des ablageeinrichtungsintegrierten Kanals mit einer Gasdruckeinrichtung, beispielsweise einer Pumpe, anbindbar ist. Weiterhin ist es bevorzugt vorgesehen, dass die Ablageeinrichtung 2 einen austauschbaren Einsatz 17 mit einem Kanalsystem umfasst, wobei der Einsatz sich in einen topfförmigen bzw. rückspringenden Verlauf in der Ablageeinrichtung einlassen lässt. Vorzugsweise umfasst der Einsatz 17 das ablageseitige Dichtelement und auf einer gegenüberliegenden Seite ein weiteres Dichtelement 26 zur Abdichtung des Kanalsystems.

### Bezugszeichen:

- 1: Vorrichtung
- 2: Ablageeinrichtung
- 3: Fixiervorrichtung
- 4: Manipulator
- 5: Bereich zwischen Ablageeinrichtung und Trägerelement
- 6: Ausformung
- 5: Zwischenbereich
- 10: Trägerelement
- 11: Klebeelement
- 12: Kamera
- 13: Spannrahmenseitiges Dichtelement
- 14: ablageeinrichtungsseitiges Dichtelement
- 15: Zentrierhilfe
- 16: Kanal
- 17: Einsatz
- 18: Überdruckventil
- 19: Ausnehmung
- 23: Kniehebelmechanismus
- 24: Anschlusseinrichtung
- 25: Schlauch
- 26: weiteres Dichtelement
- A: Abstand
- VR: Verschlussrichtung

## Patentansprüche

1. Vorrichtung (1) zum automatisierten Ablösen eines Klebeelements (11) von einem sich entlang einer Haupterstreckungsebene erstreckenden Trägerelement (10), umfassend
-- eine Ablageeinrichtung (2) zum Ablegen des Trägerelements (10) und
-- eine Fixiereinrichtung (3) zum Fixieren des Trägerelements (10) an der Ablageeinrichtung (2),
**dadurch gekennzeichnet, dass** die Fixiereinrichtung (3) und/oder die Ablageeinrichtung (2) derart ausgestaltet sind, dass das fixierte Trägerelement (10) zumindest bereichsweise, insbesondere in einem Bereich mit einem oder mehreren Klebeelementen (11), beabstandet zur Ablageeinrichtung (2) entlang der Haupterstreckungsebene spannbar ist.

2. Vorrichtung (1) gemäß Anspruch 1, weiter umfassend eine Gasdruckeinrichtung zur Erzeugung eines Überdrucks oder Unterdrucks in einem Bereich (5) zwischen der Ablageeinrichtung (2) und dem Trägerelement (10).

3. Vorrichtung (1) gemäß Anspruch 2, wobei die Ablageeinrichtung (2) einen Kanal (16) oder ein Kanalsystem aufweist, wobei der Kanal (16) oder das Kanalsystem die Gasdruckeinrichtung und den Bereich (5) zwischen der Ablageeinrichtung (2) und dem Trägerelement (10) miteinander verbindet.

4. Vorrichtung (1) gemäß einem der vorhergehenden Ansprüche, wobei die Fixiereinrichtung (3) einen Spann- oder Klemmrahmen oder eine Zugvorrichtung oder eine Spanneinrichtung umfasst.

5. Vorrichtung (1) gemäß einem der vorhergehenden Ansprüche, wobei die Fixiervorrichtung (3) einen Hebelmechanismus, insbesondere einen Kniehebelmechanismus, zum Verpressen der Fixiervorrichtung (3) gegen die Ablageeinrichtung (2) aufweist.

6. Vorrichtung (1) gemäß einem der vorhergehenden Ansprüche, weiter umfassend eine Sensoreinrichtung, insbesondere eine Kamera (12), zur Erfassung der Position der Klebeelemente (11) auf dem Trägerelement (10).

7. Vorrichtung (1) gemäß einem der vorhergehenden Ansprüche, wobei die Ablageeinrichtung (2) eine Zentrierhilfe (15) zur Ausrichtung des Trägerelements (10) und/oder der Fixiereinrichtung (3) auf der Ablageeinrichtung (2) aufweist.

8. Vorrichtung (1) gemäß einem der vorhergehenden Ansprüche, wobei die Ablageeinrichtung (2) ein Überdruckventil (18) und/oder Ausformungen (6) im Bereich (5) zwischen der Ablageeinrichtung (2) und dem Trägerelement (10) aufweist.

9. System aus einem Manipulator (4) und einer Vorrichtung (1) gemäß einem der vorhergehenden Ansprüche.

10. Verfahren zum automatisierten Ablösen eines Klebeelements (11) von einem Trägerelement (10) umfassend die Verfahrensschritte:
-- Fixieren und Spannen des Trägerelements (10) an einer Ablageeinrichtung (2) mittels einer Fixiereinrichtung (3) unter Ausbildung eines Abstand zwischen der Ablageeinrichtung (2) und dem Trägerelement (10) und
-- Ablösen, insbesondere Abschälen, des Klebeelements (11) von dem Trägerelement (10) mittels eines Manipulators (4).

## Claims

1. A device (1) for an automated removal of an adhesive element (11) from a support element (10) extending along a main extension plane, comprising
-- a deposition device (2) to deposit the support element (10) and
-- a fixing device (3) to fix the support element (10) to the deposition device (2),
**Characterized in that** the fixing device (3) und/or the deposition device (2) are configured such that the fixed support element (10), at least in certain areas, especially in an area with one or more adhesive elements (11), is stretchable spaced apart from the deposition device (2) along the main extension plane.

2. The device (1) according to Claim 1, furthermore comprising a gas pressure device to produce an overpressure or negative pressure in an area (5) between the deposition device (2) and the support element (10).

3. The device (1) according to Claim 2, wherein the deposition device (2) comprises a channel (16) or a channel system, wherein the channel (16) or the channel system connects the gas pressure device and the area (5) between the deposition device (2) and the support element (10) to each other.

4. The device (1) according to one of the preceding Claims, wherein the fixing device (3) comprises a stretching or clamping frame or a pulling device or a stretching device.

5. The device (1) according to one of the preceding Claims, wherein the fixing device (3) comprises a lever mechanism, especially a knee lever mechanism, for pressing the fixing device (3) against the deposition device (2).

6. The device (1) according to one of the preceding Claims, furthermore comprising a sensor device, especially a camera (12), for acquiring the position of the adhesive elements (11) on the support element (10).

7. The device (1) according to one of the preceding Claims, wherein the deposition device (2) comprises a centering aid (15) to orient the support element (10) und/or the fixing device (3) on the deposition device (2).

8. The device (1) according to one of the preceding Claims, wherein the deposition device (2) comprises a relief valve (18) und/or shaped elements (6) in the area (5) between the deposition device (2) and the support element (10).

9. A system composed of a manipulator (4) and a device (1) according to one of the preceding Claims.

10. A method for the automated removal of an adhesive element (11) from a support element (10) comprising the steps:
-- fixing and stretching the support element (10) at a deposition device (2) by way of a fixing device (3) to form a distance between the deposition device (2) and the support element (10); and
-- removing, especially peeling off, the adhesive element (11) from the support element (10) by way of a manipulator (4).

## Revendications

1. Dispositif (1) de détachement automatique d'un élément adhésif (11) d'un élément de support (10) s'étendant le long d'un plan d'extension principal, le dispositif comprenant
- un moyen de dépôt (2) destiné à déposer l'élément de support (10) et
- un moyen de fixation (3) destiné à fixer l'élément de support (10) sur le moyen de dépôt (2),
**caractérisé en ce que**
le moyen de fixation (3) et/ou le dispositif de dépôt (2) étant conçus de telle sorte que l'élément de support (10) fixé puisse être serré au moins par endroits, en particulier dans une zone comprenant au moins un élément adhésif (11), en étant espacé du moyen de dépôt (2) le long du plan d'extension principal.

2. Dispositif (1) selon la revendication 1, comprenant en outre un moyen de pression de gaz destiné à générer une surpression ou une dépression dans une zone (5) située entre le moyen de dépôt (2) et l'élément de support (10).

3. Dispositif (1) selon la revendication 2, le dispositif de dépôt (2) comportant un canal (16) ou un système de canaux, le canal (16) ou le système de canaux reliant l'un à l'autre le moyen de pression de gaz et la zone (5) située entre le moyen de dépôt (2) et l'élément de support (10).

4. Dispositif (1) selon l'une des revendications précédentes, le moyen de fixation (3) comprenant un cadre de serrage ou de pincement ou un dispositif de traction ou un moyen de serrage.

5. Dispositif (1) selon l'une des revendications précédentes, le moyen de fixation (3) comportant un mécanisme à levier, notamment un mécanisme à genouillère, destiné à presser le dispositif de fixation (3) contre le moyen de dépôt (2).

6. Dispositif (1) selon l'une des revendications précédentes, comprenant en outre un moyen de détection, notamment une caméra (12), destiné à détecter la position des éléments adhésifs (11) sur l'élément de support (10).

7. Dispositif (1) selon l'une des revendications précédentes, le dispositif de dépôt (2) comportant un auxiliaire de centrage (15) destiné à orienter l'élément de support (10) et/ou le moyen de fixation (3) sur le moyen de dépôt (2).

8. Dispositif (1) selon l'une des revendications précédentes, le moyen de dépôt (2) comportant une soupape de surpression (18) et/ou des saillies (6) dans la zone (5) située entre le moyen de dépôt (2) et l'élément de support (10).

9. Système comprenant un manipulateur (4) et un dispositif (1) selon l'une des revendications précédentes.

10. Procédé de détachement automatisé d'un élément adhésif (11) d'un élément de support (10), le procédé comprenant les étapes suivantes :
- fixer et serrer l'élément de support (10) sur un moyen de dépôt (2) à l'aide d'un moyen de fixation (3) de façon à ménager une distance entre le moyen de dépôt (2) et l'élément de support (10) et
- détacher, en particulier écailler, l'élément adhésif (11) de l'élément de support (10) à l'aide d'un manipulateur (4).
